# EUROPEAN PATENT APPLICATION

(11) **EP 0 646 774 A2**
(43) Date of publication of application: **05.04.1995**
(21) Application number: 94307093.8
(22) Date of filing: 28.09.1994
(51) Int. Cl.: G01D 3/02, G01D 5/22

(54) **Apparatus for compensating for phase shift**

(30) Priority: 02.10.1993 GB 9320346
(71) Applicant: LUCAS INDUSTRIES PUBLIC LIMITED COMPANY, Solihull, West Midlands B91 3TX (GB)
(72) Inventor: Delve, Trefor James, Near Malvern, Herefordshire, WR13 5LT (GB)
(74) Representative: Robinson, John Stuart

(57) **Abstract**

An apparatus is provided for compensating for phase shift occurring in a signal being returned from a remote sensor (1). The apparatus comprises an excitation generator (30) which supplies an excitation signal to the remote sensor (1). The return signal from the sensor (1) is supplied via an over-sampling analogue-to-digital converter (22, 23) to a phase splitter (24) which divides the return signal into its real or in-phase component and its imaginary or quadrature component. The amplitude of the quadrature component is compared with zero by a comparator (28) and via a control circuit (29) controls the phase shift (25) between the excitation signal from the generator (30) and the return signal. The phase of the excitation signal is controlled so that the quadrature component is zero and the real component therefore represents the amplitude of the sensor signal.

## Description

The present invention relates to an apparatus for compensating for phase shift. Such an apparatus may be used for compensating for phase shift between an excitation signal and an output or return signal of a transducer, such as a linear variable displacement transducer (LVDT).

In many applications, for instance in the aerospace field, a transducer is used at a location which is remote from processing electronics for the transducer output or return signal. Transducers such as LVDT's require an excitation signal, such as a sine wave, and return an output signal whose amplitude provides a measure of a physical property. For instance, in an aircraft, a LVDT may be connected via an aircraft wiring loom to a processing control circuit. The electronic processing circuit generates the excitation signal and receives the return signal, which is typically compared with the excitation signal in order to derive the measured quantity. However, because of the remote location of the transducer, there is a phase shift between the excitation and return signals in the processing circuit which requires compensation in order for the quantity to be correctly measured. In general, this phase shift, which results from the inductance of the wiring loom and from temperature effects, is not accurately predictable and cannot therefore be fully compensated for.

According to the invention, there is provided an apparatus for compensating for phase shift, comprising an excitation generator for generating an excitation signal, characterised in that the excitation generator is arranged to generate the excitation signal having a first phase with respect to a reference phase, and characterised by a phase comparator for comparing a second phase of a return signal with the reference phase and a phase varying circuit for varying the first phase and/or the second phase so that the second phase is equal to a predetermined phase with respect to the reference phase.

Preferably the predetermined phase is equal to zero.

The comparing means may comprise a phase splitter for splitting the return signal into in-phase (real) and quadrature (imaginary) components with respect to the predetermined phase. The phase varying means may be arranged to vary the first phase and/or the second phase so that the amplitude of the quadrature component is equal to zero. The phase splitter may comprise means for multiplying the return signal by first and second sine waves of the same frequency and in quadrature, and the phase varying means may be arranged to vary the phase difference between the first and second sine waves and the excitation signal.

A sigma delta modulator may be provided for converting the return signal into a digital signal. A digital filter may be provided for reducing the bit rate of the output of the sigma delta modulator. Such an arrangement is known as an over-sampling analogue-to-digital converter.

A remote switch may be provided for selectively returning the excitation signal as the return signal.

The invention will be further described, by way of example, with reference to the accompanying drawings, in which:
Figure 1 is a diagram illustrating a linear variable displacement transducer (LVDT);
Figure 2 illustrates the LVDT at its maximum positive stroke;
Figure 3 is a phase diagram illustrating the return signal for the LVDT in Figure 2;
Figure 4 illustrates the LVDT of Figure 1 at its maximum negative stroke;
Figure 5 is a phase diagram of the return signal for the LVDT in Figure 4;
Figure 6 is a block diagram illustrating a known arrangement for use with a remote LVDT;
Figure 7 is a phase diagram illustrating the phase of an excitation signal for the LVDT of Figure 6;
Figure 8 is a phase diagram illustrating the phase of a return signal of the LVDT of Figure 6;
Figure 9 is a block diagram of an apparatus constituting a first embodiment of the invention;
Figure 10 is a phase diagram illustrating the phase of an excitation signal for the LVDT of Figure 9;
Figure 11 is a phase diagram illustrating the phase of the return signal of the LVDT of Figure 9; and
Figure 12 is a block diagram of an apparatus constituting a second embodiment of the invention.

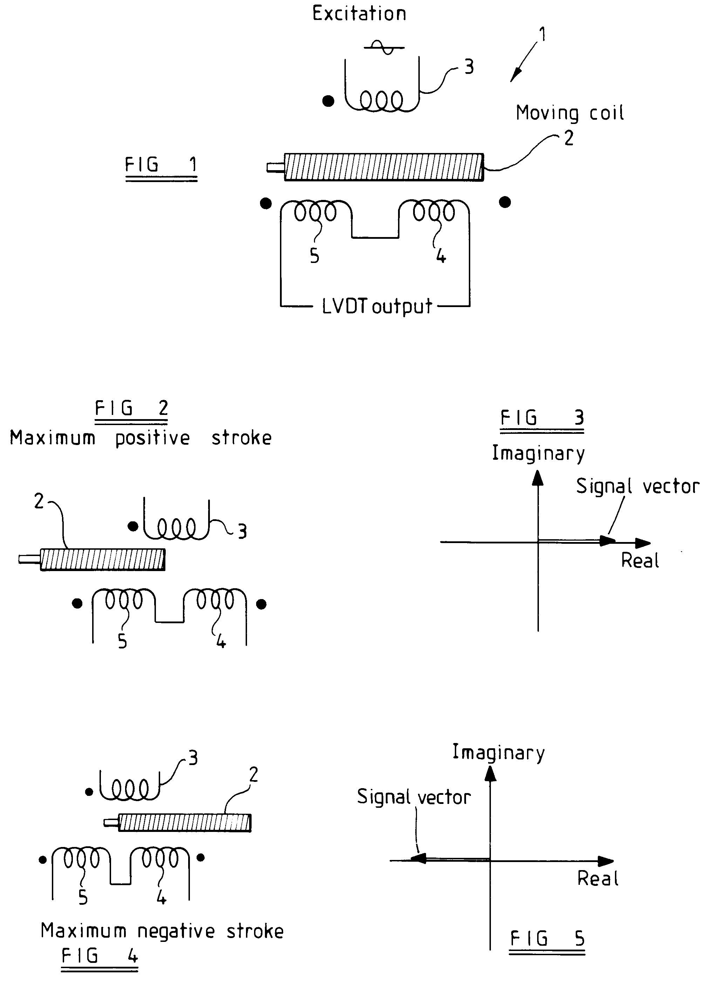

The LVDT 1 shown in Figure 1 comprises a moving core 2 arranged to be connected to a movable device whose displacement is to be measured. The LVDT has a primary winding 3 for receiving a sine wave excitation signal and a pair of secondary windings 4 and 5 connected out of phase and in series for providing an LVDT output or return signal. The black dots adjacent the ends of the windings shown in Figure 3 indicate the relative phases or directions of the windings.

Figure 2 illustrates the maximum positive stroke of the moving core 2 and Figure 3 illustrates the signal vector of the return signal. In the position shown in Figure 2, the coupling between the primary winding 3 and the secondary winding 5 is at a maximum whereas the coupling between the primary winding 3 and the secondary winding 4 is at a minimum. The phase of the excitation signal is in the direction of the positive real axis of Figure 3 and the phase of the signal vector is in the same direction with no quadrature or imaginary component.

Figure 4 illustrates the LVDT with the moving core 2 at its maximum negative stroke. In this position, the coupling between the primary winding 3 and the secondary winding 4 is at a maximum whereas the coupling between the primary winding 3 and the secondary winding 5 is at a minimum. As shown in Figure 5, the phase of the signal vector is in the real direction and without any imaginary component but is opposite the phase of the excitation signal.

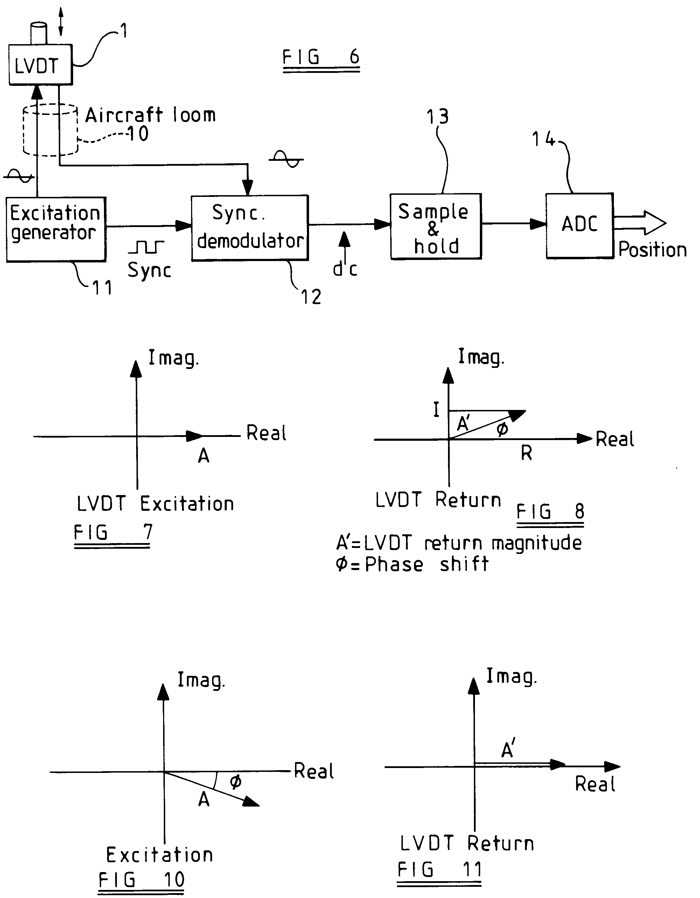

Figure 6 shows a known processing circuit connected to an LVDT 1 of the type shown in Figure 1 by means of an aircraft wiring loom 10. An excitation generator 11 supplies the excitation signal via the loom 10 to the LVDT 1, and the return signal is supplied via the loom 10 to a synchronous demodulator 12. The synchronous demodulator 12 receives a sync signal from the excitation generator in the form of a square wave which is in phase synchronism with the excitation signal. The synchronous demodulator 12 thus demodulates the return signal and provides a direct output signal (after low pass filtering) which is supplied via a sample and hold circuit 13 to an analogue-to-digital converter 14, whose digital output represents the position or displacement of the moving core 2 of the LVDT 1.

Figure 7 illustrates the amplitude A and phase of the excitation signal, the phase being zero with respect to the positive real axis. Figure 8 illustrates the return signal of amplitude A' and of phase φ with respect to the positive real axis. The inductance of the path from the excitation generator 11 via the loom 10 to the LVDT 1 and via the loom 10 to the synchronous demodulator 12 results in the non-zero phase shift φ of the return signal with respect to the excitation signal. Thus, the return signal has an imaginary component and the output of the synchronous demodulator 12, which is equal to the real component of the return signal, is less than the actual amplitude A' of the return signal. Thus, unless steps are taken to compensate for the phase shift φ, the processing circuit of Figure 6 will give inaccurate measures of displacement of the moving core 2. Measurement of φ is complex; calculation of φ is difficult.

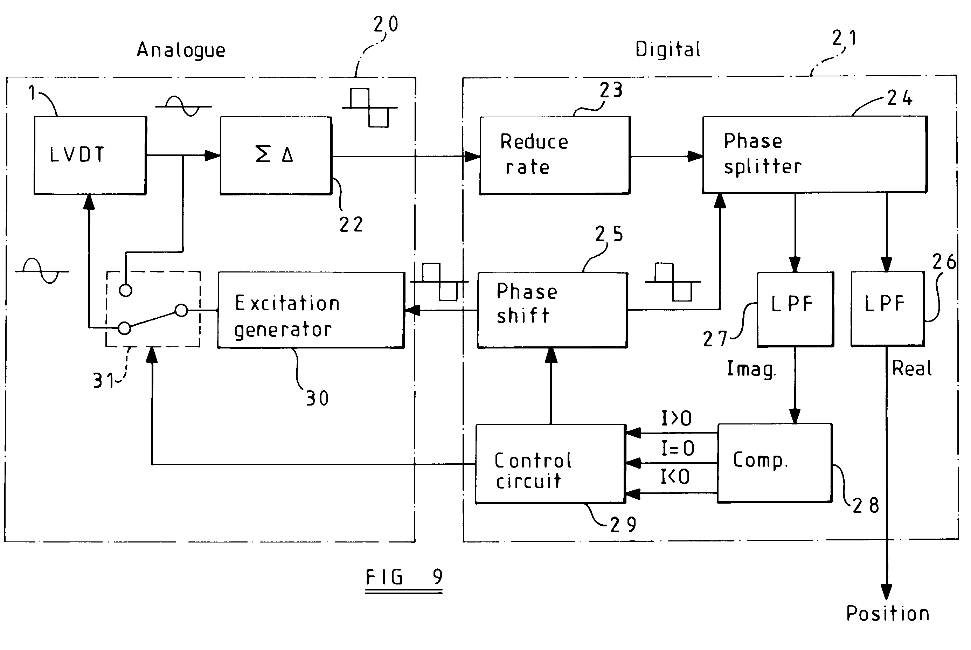

The apparatus shown in Figure 9 comprises an analogue section 20 and a digital section 21. The analogue section 20 comprises an LVDT 1 of the type shown in Figure 1 whose output is connected to the input of a sigma delta modulator 22. As is well known, the sigma delta modulator 22 converts an analogue input signal into a one bit digital output signal at a relatively high bit rate. The output of the modulator 22 is connected to the input of a rate reduction circuit 23 which converts the one bit high rate signal from the modulator 22 into a multi-bit low rate digital signal. This arrangement of a modulator 22 and rate reduction circuit 23 is commonly known as an over-sampling analogue-to-digital converter.

The output of the circuit 23 is connected to a first input of a phase splitter 24 whose second input is connected to a first output of a phase shift circuit 25. The phase splitter 24 splits the digitised return signal from the circuit 23 into real and imaginary components which are supplied to low pass filters 26 and 27, respectively. The filters 26 and 27 remove the alternating components so that the direct real component is supplied as an output signal representing the position of the LVDT moving core and the imaginary component provides a measure of the phase shift between the excitation signal and the return signal.

The direct imaginary component is supplied from the filter 27 to a comparator 28 having three outputs for indicating whether the imaginary component is less than zero, equal to zero, or greater than zero. The outputs of the comparator 28 are supplied to a control circuit 29 which provides a signal for controlling the phase shift circuit 25.

The output of the phase shift circuit 25 is connected to the input of an excitation generator 30, whose output is connected to an electronic switch 31 controlled by the control circuit 29. The switch 31 has a first output connected to the LVDT for supplying the excitation signal thereto and a second output connected to the input of the modulator 22 for returning the excitation signal as the return signal.

The control circuit 29 and the phase shift circuit 25 provide signals for the excitation generator 30 and the phase splitter 24. These signals have the same frequency but a relative phase shift which is controlled by the control circuit 29.

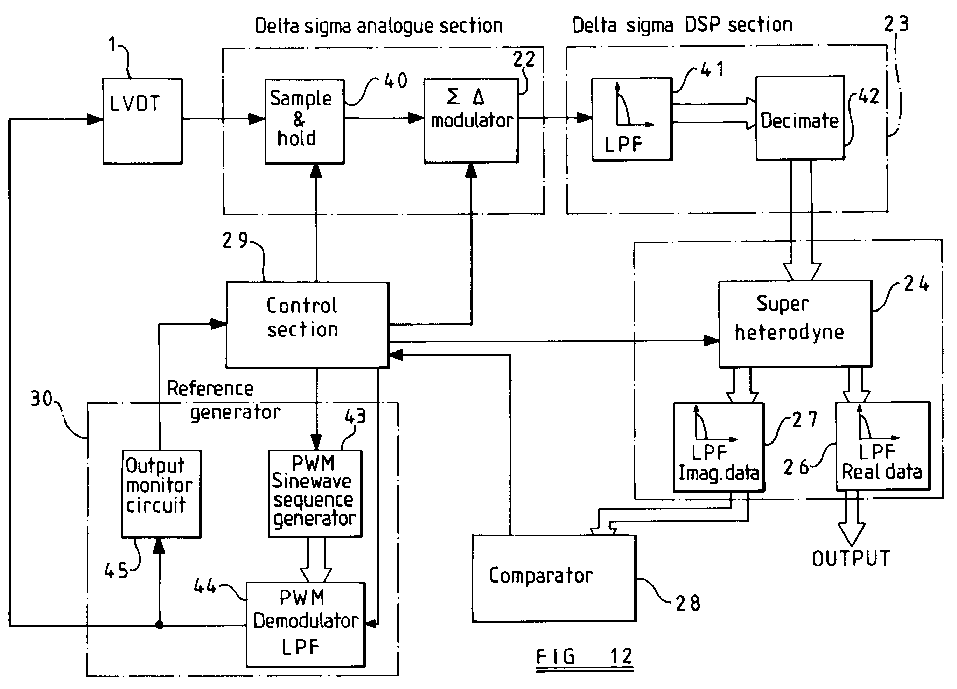

The excitation signal is shown in Figure 10, and has an amplitude A and a phase -φ such that the return signal shown in Figure 11 has zero phase shift with respect to the positive real axis (for the maximum positive stroke of the LVDT). Thus, with the switch 31 supplying the excitation signal to the LVDT 1, the imaginary component of the return signal supplied by the phase splitter 24 via the filter 27 to the comparator 28 is used by the control circuit 29 to alter the phase shift between the excitation signal and the phase reference signals supplied to the phase splitter 24 so as to vary the phase of the excitation signal until the imaginary component is equal to zero. The real output from the filter 26 is then aligned with the real axis as shown in Figure 11 and represents the displacement of the LVDT core.

The control circuit 29 periodically causes the switch 31 to return the excitation signal from the generator 30 as the return signal. By measuring the amplitude of the return signal, the effects of attenuation and the like, which may vary with time and temperature, can be determined so as to compensate for such effects in the displacement measurement.

The apparatus shown in Figure 12 is similar to that shown in Figure 9, and like reference numerals refer to like parts.

The LVDT 1 is connected to the delta sigma modulator 22 via a sample and hold circuit 40. The output of the modulator is connected to the circuit 23 which comprises a low pass filter 41 and a decimating filter 42. The output of the filter 42 is connected to the phase splitter 24, which comprises a superheterodyne circuit. The circuit 24 multiplies the output signal of the circuit 23 by sine and co-sine functions of the same frequency and supplies the resulting products to the filters 26 and 27, respectively.

The excitation generator 30 comprises a pulse width modulated sine wave sequence generator 43 which generates or stores in a look-up table the pulse width modulated values corresponding to a sine wave. The phase of the sine wave is controlled by the control section 29. The output of the generator 43 is connected to a pulse width demodulator and low pass filter 44, whose output comprises a sine wave at the same frequency as the sine and co-sine signals supplied to the superheterodyne circuit 24. This signal is supplied as the excitation signal to the LVDT and is also supplied to an output monitor circuit 45 whose output is connected to the control section 29, for instance to provide closed loop control of the phase of the excitation signal.

The switch 31 is not shown in Figure 12.

It is thus possible to provide an arrangement which compensates for phase shifts caused by the inductance of leads such as aircraft wiring looms, and which compensates for any temperature induced phase shifts, so as to remove errors in position data provided by an LVDT. General component and temperature errors which are present in conventional synchronous demodulation arrangements are avoided, and it is possible to make apparatuses of the type shown in Figures 9 and 12 in the form of application specific integrated circuits (ASIC's). It is unnecessary to perform lengthy or rapid calculations, which are costly in terms of integration area or processor time, in order to compensate for the phase shift.

Various modifications may be made within the scope of the invention. For instance, the apparatuses of Figures 9 and 12 may be arranged to be shared between a plurality of remote transducers by appropriate multiplexing. Each transducer may be provided with a switch 31 for individual calibration purposes.

## Claims

1. An apparatus for compensating for phase shift, comprising an excitation generator (30) for generating an excitation signal, characterised in that the excitation generator (30) is arranged to generate the excitation signal having a first phase with respect to a reference phase, and characterised by a phase comparator (24, 27, 28) for comparing a second phase of a return signal with the reference phase and a phase varying circuit (25, 29) for varying the first phase and/or the second phase so that the second phase is equal to a predetermined phase with respect to the reference phase.

2. An apparatus as claimed in Claim 1, characterised in that the predetermined phase is equal to zero.

3. An apparatus as claimed in Claim 1 or 2, characterised in that the phase comparator (24, 27, 28) comprises a phase splitter (24) for splitting the return signal into in-phase and quadrature components with respect to the predetermined phase.

4. An apparatus as claimed in Claim 3, characterised in that the phase varying circuit (25, 29) is arranged to vary the first phase and/or the second phase so that the amplitude of the quadrature component is equal to zero.

5. An apparatus as claimed in Claim 3 or 4, characterised in that the phase splitter (24) comprises a multiplier (24) for multiplying the return signal by first and second sine waves of the same frequency and in quadrature, and in that the phase varying circuit (25, 29) is arranged to vary the phase difference between the first and second sine waves and the excitation signal.

6. An apparatus as claimed in any one of the preceding claims, characterised by a sigma delta modulator (22) for converting the return signal into a digital signal.

7. An apparatus as claimed in Claim 6, characterised by a digital filter (23) for reducing the bit rate of the output of the sigma delta modulator (22).

8. An apparatus as claimed in any one of the preceding claims, characterised by a remote switch (31) for selectively returning the excitation signal as the return signal.
